# EUROPEAN PATENT APPLICATION

(11) **EP 4 546 532 A1**
(43) Date of publication of application: **30.04.2025**
(21) Application number: 23826567.2
(22) Date of filing: 21.06.2023
(51) Int. Cl.: H01M 50/258, H01M 50/30, H01M 50/358, H01M 50/204, H01M 50/244, H01M 50/249, B60L 50/64

(54) **BATTERY PACK AND VEHICLE**

(30) Priority: 23.06.2022 CN 202221617994 U; 09.01.2023 CN 202320076673 U
(71) Applicant: BYD Company Limited, Shenzhen, Guangdong 518118 (CN)
(72) Inventor: LIAO, Zhengyuan, Shenzhen, Guangdong 518118 (CN); WANG, Xiaolong, Shenzhen, Guangdong 518118 (CN); LU, Zhipei, Shenzhen, Guangdong 518118 (CN); LIU, Xufeng, Shenzhen, Guangdong 518118 (CN); SUN, Zenan, Shenzhen, Guangdong 518118 (CN)
(74) Representative: Taor, Simon Edward William
(86) International application number: PCT/CN2023/101957
(87) International publication number: WO 2023/246922

(57) **Abstract**

A battery pack and a vehicle. The battery pack comprises a sealing cover, a tray, a plurality of battery cells, insulating layers, and at least one connecting sheet, wherein the tray is connected to the sealing cover to define an accommodating cavity; the plurality of battery cells are arranged in the accommodating cavity; the side of each battery cell facing away from the sealing cover is provided with a first explosion-proof valve; each insulating layer is arranged on the side of the battery cell facing away from the sealing cover; the connecting sheet is arranged on the insulating layer; the battery cells are electrically connected by means of the connecting sheet; and each insulating layer is provided with a gas emission portion configured to make the outside be in communication with the first explosion-proof valve.

## Description

### CROSS-REFERENCE TO RELATED APPLICATIONS

The present disclosure claims priority to and benefits of Chinese Patent Application No. 202221617994.8, filed on June 23, 2022 and entitled "BATTERY PACK AND VEHICLE", and to Chinese Patent Application No. 202320076673.X, filed on January 9, 2023 and entitled "BATTERY PACK AND VEHICLE". The entire content of the above-referenced applications is incorporated herein by reference.

### FIELD

The present disclosure relates to the field of battery technologies, and specifically, to a battery pack and a vehicle.

### BACKGROUND

When a fault occurs in a battery cell of a power battery, high-temperature and high-pressure gas is generated inside the battery cell. To prevent a possible explosion, an explosion-proof valve may be disposed on a housing of the battery cell, and when the fault in the battery cell causes excessive pressure, the explosion-proof valve opens to relief pressure.

In a related art, a battery pack is generally disposed at a bottom of a vehicle. When the battery pack is assembled, multiple battery cells are connected in series or in parallel. When a fault occurs in a battery cell, high-temperature and high-pressure gas inside the battery cell is emitted through the explosion-proof valve and impacts other battery cells. When a thermal failure occurs in the entire battery pack, high-temperature and high-pressure gas in the battery pack is emitted upward, and the gas emitted upward through the explosion-proof valve of the battery pack impacts a passenger compartment, causing injury to a passenger or a driver.

### SUMMARY

The present disclosure aims to provide a battery pack and a vehicle, to resolve at least one of the technical problems existing in the related art.

To achieve the above objective, a battery pack is provided, which includes: a sealing cover; a tray, connected to the sealing cover to define an accommodating cavity; multiple battery cells, disposed in the accommodating cavity, a first explosion-proof valve being disposed on a side that is of the battery cell and that faces away from the sealing cover; and an insulating layer, disposed on the side that is of the battery cell and that faces away from the sealing cover, a gas emission piece being disposed on the insulating layer, and the gas emission piece communicating the outside and the first explosion-proof valve.

Optionally, the battery pack further includes at least one connecting sheet. The connecting sheet is disposed on the insulating layer, and the battery cells are electrically connected to each other through the connecting sheet.

Optionally, the insulating layer is an insulating bracket, the tray includes a bottom plate, and the bottom plate is configured as the insulating bracket.

Optionally, the gas emission piece includes a first sub-channel and multiple through holes, the multiple through holes are provided on the insulating bracket, and the first sub-channel is provided in the insulating bracket and configured to be in communication with the outside. The multiple through holes are provided in a one-to-one correspondence with first explosion-proof valves of the multiple battery cells, and the multiple through holes are all in communication with the first sub-channel.

Optionally, the insulating layer is an insulating bracket, the tray includes a bottom plate, the bottom plate has a hollow region, and the insulating bracket is disposed in the hollow region.

Optionally, the bottom plate is provided with a first exhaust channel, and the gas emission piece is in communication with the outside through the first exhaust channel.

Optionally, the gas emission piece includes a first sub-channel and multiple through holes. The multiple through holes are provided on the insulating bracket, the first sub-channel is provided in the insulating bracket, and the multiple through holes are provided in a one-to-one correspondence with first explosion-proof valves of the multiple battery cells. The multiple through holes are all in communication with the first sub-channel, and the first sub-channel is in communication with the first exhaust channel.

Optionally, the gas emission piece further includes a groove, the groove is provided on the insulating bracket, and the groove is open to a side of the sealing cover. The through holes are provided on a bottom wall of the groove, and the battery cell abuts against a sidewall of the groove to form a second sub-channel through enclosure. The first sub-channel is provided on a side that is of the insulating bracket and that faces away from the sealing cover, and the first sub-channel and the second sub-channel are oppositely provided and are in communication through the through holes.

Optionally, the multiple battery cells are sequentially laid out along a first direction to form a battery cell sequence, multiple battery cell sequences are disposed and are sequentially laid out along a second direction, multiple gas emission pieces are disposed and are in a one-to-one correspondence with the multiple battery cell sequences, and the first direction is perpendicular to the second direction.

Optionally, a second explosion-proof valve is disposed at an end of the first exhaust channel away from the gas emission piece.

Optionally, the insulating bracket is bonded to the tray.

Optionally, a diameter of the through hole is greater than a diameter of the first explosion-proof valve.

Optionally, the insulating layer is an insulating bracket, the tray includes a bottom plate, and the insulating bracket is disposed on a side that is of the bottom plate and that faces the sealing cover. The gas emission piece includes multiple exhaust holes, and the multiple exhaust holes are provided on the insulating bracket. A second exhaust channel is provided in the bottom plate. The multiple exhaust holes are provided in a one-to-one correspondence with first explosion-proof valves of the multiple battery cells, and the multiple exhaust holes are in communication with the outside through the second exhaust channel.

Optionally, the battery pack includes at least one connecting sheet, the connecting sheet is disposed on the insulating layer, and the battery cells are electrically connected to each other through the connecting sheet. The battery cell has a positive terminal and a negative terminal, the positive terminal and the negative terminal are located on a side that is of the corresponding battery cell and that faces away from the sealing cover, and at least one connecting sheet is electrically connected to a positive terminal of one of the corresponding two battery cells and a negative terminal of the other.

Optionally, an accommodating space is provided on a side that is of the insulating bracket and that faces the sealing cover, and a positive terminal of the battery cell and/or a negative terminal of the battery cell are located in the accommodating space.

Optionally, a depth of the accommodating space is greater than or equal to a length of the positive terminal or the negative terminal of the corresponding battery cell.

Optionally, a surface that is of the battery cell and that is provided with the positive terminal and the negative terminal abuts against the side that is of the insulating bracket and that faces the sealing cover, and the insulating bracket supports the battery cell.

Optionally, the multiple battery cells are sequentially laid out along the first direction to form the battery cell sequence, and the accommodating space is distributed on at least one side of the gas emission piece along the second direction. The positive terminal of the battery cell and/or the negative terminal of the battery cell are located in the corresponding accommodating space, and the first direction is perpendicular to the second direction.

Optionally, the battery pack includes at least one connecting sheet, the connecting sheet is disposed on the insulating layer, the battery cells are electrically connected to each other through the connecting sheet, and the connecting sheet and the insulating bracket are integrally formed; and/or the battery pack further includes at least one sampling member, the sampling member is connected to the corresponding battery cell, and the sampling member and the insulating bracket are integrally formed.

Optionally, the sampling member is a sampling harness, FPC, or PCB board.

Optionally, the battery pack includes at least one connecting sheet, the connecting sheet is disposed on the insulating layer, and the battery cells are electrically connected to each other through the connecting sheet. The battery pack further includes a battery information collector and a circuit board that is separately connected to the battery information collector and the connecting sheet, and the battery information collector, the connecting sheet, and the circuit board each are fastened to the insulating bracket.

Optionally, the connecting sheet and the circuit board are integrated on the insulating bracket, and the connecting sheet and the circuit board each are formed integrally with the insulating bracket. The connecting sheet is fastened to a side that is of the insulating bracket and that faces the battery cell, the circuit board is embedded in the insulating bracket, and the battery information collector is fastened to a side that is of the insulating bracket and that faces away from the battery cell.

Optionally, the battery pack further includes a heat dissipation plate, provided with a flow channel for flowing a cooling medium. The multiple battery cells are laid out along the second direction to form a battery cell group. Multiple battery cell groups are disposed, and the multiple battery cell groups are laid out along the first direction. The first direction is perpendicular to the second direction, the heat dissipation plate is disposed between any two adjacent battery cell groups, and the heat dissipation plate is thermally connected to the two corresponding battery cell groups.

Optionally, the second direction is a width direction of the battery cell, the first direction is a thickness direction of the battery cell, and a width of the battery cell is greater than a thickness of the battery cell.

Optionally, an outer surface of the battery cell includes two first surfaces opposed along the first direction, two second surfaces opposed along the second direction, and two third surfaces opposed along a third direction, and the first direction, the second direction, and the third direction are perpendicular to each other. In the first surface, the second surface, and the third surface, the first surface has a largest area, and the heat dissipation plate is thermally connected to a first surface of each battery cell in the two corresponding battery cell groups.

Optionally, the battery pack further includes an expansion beam and a cooling plate disposed in the accommodating cavity. The expansion beam is disposed adjacent to the multiple battery cells, and the expansion beam is fastened to the tray. The cooling plate is pressed against a side that is of the battery cell and that faces the sealing cover, and the cooling plate is fixedly connected to the expansion beam.

According to a second aspect of the present disclosure, a vehicle is provided, including a vehicle body and the battery pack described above. The tray is fixedly connected to the vehicle body. Alternatively, the vehicle body is integrally formed with the tray or the sealing cover.

According to the foregoing technical solution, the first explosion-proof valve is disposed on the side that is of the battery cell and that is close to the tray, so that the first explosion-proof valve can emit gas toward the insulating layer below, and the gas can be emitted through the gas emission piece on the insulating layer. A downward emission direction of the gas can avoid an upward flow of the gas and can avoid impact on a cab, to reduce injury to a passenger inside the vehicle.

Other features and advantages of the present disclosure will be described in detail in the following detailed description part.

### BRIEF DESCRIPTION OF THE DRAWINGS

The accompanying drawings are intended to provide further understanding of the present disclosure and constitute a part of this specification. The accompanying drawings and the specific implementations below are used together for explaining the present disclosure rather than constituting a limitation to the present disclosure. In the accompanying drawings:
FIG. 1 is a diagram of a battery pack according to an embodiment of the present disclosure;
FIG. 2 is a diagram of a battery pack according to an embodiment of the present disclosure;
FIG. 3 is a diagram of a battery pack according to an embodiment of the present disclosure;
FIG. 4 is a diagram of a battery pack according to an embodiment of the present disclosure;
FIG. 5 is an exploded diagram of a battery pack according to an embodiment of the present disclosure;
FIG. 6 is an exploded diagram of a battery pack according to an embodiment of the present disclosure;
FIG. 7 is an exploded diagram of a battery pack according to an embodiment of the present disclosure;
FIG. 8 is a diagram of a battery pack according to an embodiment of the present disclosure;
FIG. 9 is a diagram of a battery pack according to an embodiment of the present disclosure;
FIG. 10 is a diagram of a battery pack according to an embodiment of the present disclosure;
FIG. 11 is a diagram of an insulating bracket of a battery pack according to an embodiment of the present disclosure;
FIG. 12 is a diagram of an insulating bracket of a battery pack according to an embodiment of the present disclosure;
FIG. 13 is a cross-sectional view along A-A in FIG. 1;
FIG. 14 is a partial enlarged view of a part B in FIG. 10;
FIG. 15 is an exploded diagram of a battery pack according to an embodiment of the present disclosure; and
FIG. 16 is a diagram of a vehicle according to an embodiment of the present disclosure.

### In the drawings:

10-battery pack; 100-battery cell; 1001-battery cell sequence; 1002-battery cell group; 101-first explosion-proof valve; 102-terminal; 1021-positive terminal; 1022-negative terminal; 110-first surface; 120-second surface; 130-third surface; 200-gas emission piece; 21-insulating layer; 210-insulating bracket; 211-third exhaust channel; 2111-second sub-channel; 2112-first sub-channel; 2113-groove; 2114-bottom wall; 2115-sidewall; 212-partition plate; 213-through hole; 214-plate piece; 215-accommodating space; 220-battery information collector; 230-connecting sheet; 231-sample piece; 240-circuit board; 300-tray; 3001-bottom plate; 301-second explosion-proof valve; 302-hollow region; 310-first exhaust channel; 400-sealing cover; 500-expansion beam; 600-cooling plate; 610-heat dissipation plate; 700-distribution box; 800-pipe connector; 900-vehicle; 910-vehicle body.

### DETAILED DESCRIPTION

Specific implementations of the present disclosure are described in detail below with reference to the accompanying drawings. It should be understood that the specific implementations described herein are merely used to describe and explain the present disclosure, but are not intended to limit the present disclosure.

In the present disclosure, unless otherwise stated, directional terms such as "inner and outer" refer to inside and outside of a contour of a corresponding component. The "connection" mentioned in the following may include a mechanical connection, an electrical connection, and the like, and may be determined according to actual functions of components. For example, a connection between a connecting sheet and a circuit board is an electrical connection, and a form of the electrical connection may be a wired connection or a wireless connection.

Furthermore, terms such as "first" and "second" are used in the present disclosure to distinguish an element from another element, and are not of sequence or importance. When the following description involves the accompanying drawings, unless otherwise indicated, the same numerals in different accompanying drawings represent the same or similar elements.

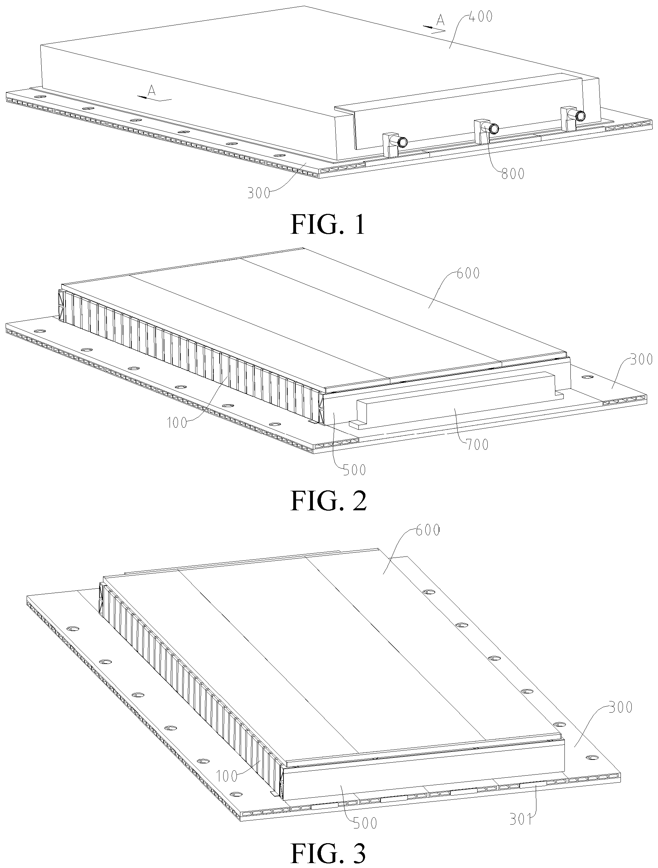

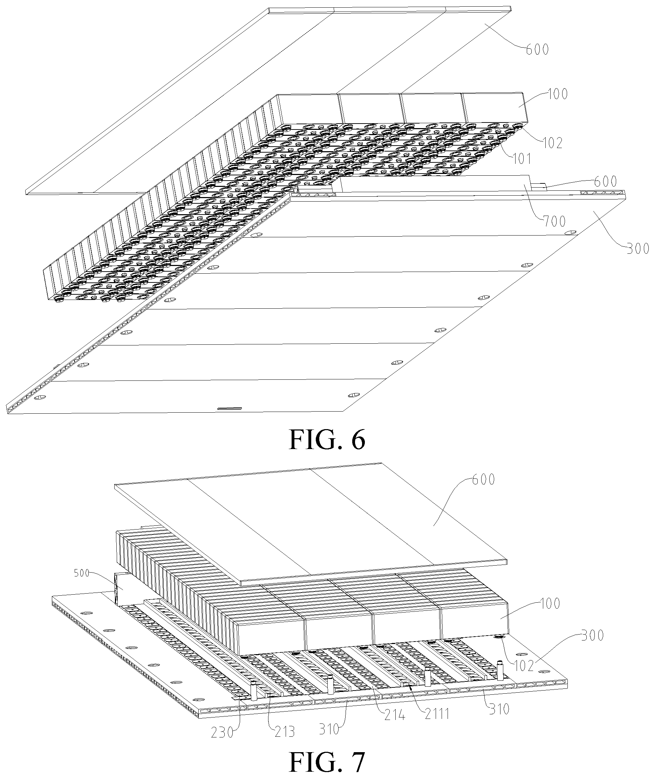

As shown in FIG. 1 to FIG. 7, the present disclosure provides a battery pack, including a sealing cover 400, a tray 300, multiple battery cells 100, and an insulating layer 21. The sealing cover 400 is connected to the tray 300 to define an accommodating cavity, and the multiple battery cells 100 are disposed in the accommodating cavity. When the battery pack is used in a vehicle, the tray 300 is fixedly connected to a vehicle body. For example, the tray 300 may fasten the battery pack to the vehicle body as a whole by bolts. Alternatively, the vehicle body is integrally formed with the tray or the sealing cover 400. The vehicle body may be a vehicle frame or a chassis. Each battery cell 100 has a first explosion-proof valve 101 facing away from the sealing cover 400, or a part of the battery cells 100 each have a first explosion-proof valve 101 facing away from the sealing cover 400. That is, the first explosion-proof valve 101 is disposed on a side that is of each battery cell 100 or a part of the battery cells 100 and that faces away from the sealing cover 400. The insulating layer 21 is disposed on the side that is of the battery cell 100 and that faces away from the sealing cover 400, a gas emission piece 200 is disposed on the insulating layer 21, and the gas emission piece 200 communicates the outside and the first explosion-proof valve 101. The insulating layer 21 may be an insulating bracket 210 (the insulating bracket 210 and a connecting sheet 230 described below may be integrally formed or assembled as an integral component) or an insulating coating (the insulating coating may be, for example, coated on the tray 300). Herein, in this embodiment of the present disclosure, the sealing cover 400 and the tray 300 may be bolted. In addition, in other embodiments, the sealing cover 400 and the tray 300 may be connected by a buckle, and a sealing adhesive is coated on the connection. This is not limited in the present disclosure.

A type of the first explosion-proof valve 101 is not limited in the present disclosure. For example, in this embodiment of the present disclosure, the first explosion-proof valve 101 may be a rupture disk. In this embodiment of the present disclosure, the gas emission piece 200 may be formed integrally with the insulating bracket 210 by a structural design of the insulating bracket 210. In addition, in other embodiments, the gas emission piece 200 may alternatively be a separate component, and the gas emission piece 200 is fastened to the insulating bracket 210 by bonding or the like. This is not limited in the present disclosure.

According to the foregoing technical solution, the first explosion-proof valve 101 is disposed on the side that is of the battery cell 100 and that is close to the tray 300, so that the first explosion-proof valve 101 can emit gas toward the insulating layer 21 below, and the gas can be emitted through the gas emission piece 200 on the insulating layer 21. A downward emission direction of the gas can avoid an upward flow of the gas and can avoid impact on a cab, to reduce injury to a passenger inside a vehicle.

To connect the multiple battery cells 100 in series or in parallel as a whole, in this embodiment of the present disclosure, the battery pack 10 may further include at least one connecting sheet 230. The connecting sheet 230 may be disposed on the insulating layer 21, and the battery cells 100 may be electrically connected to each other through the connecting sheet 230.

Further, in this embodiment of the present disclosure, each battery cell 100 may have a positive terminal 1021 and a negative terminal 1022. The positive terminal 1021 and the negative terminal 1022 are disposed on a side that is of the corresponding battery cell 100 and that faces away from the sealing cover 400, that is, are disposed on a same side as the first explosion-proof valve 101, so that the battery cell as a whole is "inverted" in the battery pack. In this arrangement, the positive and negative terminals of the battery cell are disposed downward, to facilitate connection to the connecting sheet 230. The at least one connecting sheet 230 is electrically connected to a positive terminal 1021 of one of two corresponding battery cells 100 and a negative terminal 1022 of the other, so that the multiple battery cells 100 are connected to form a battery module. Herein, in this embodiment of the present disclosure, the connecting sheet 230 and the terminals 102 may be welded. Certainly, in another embodiment, the battery cell 100 may include only a positive terminal 1021, and a housing of the battery cell 100 is negatively charged. In this case, the connecting sheet 230 is connected to a positive terminal 1021 of one of two battery cells 100 and a housing of the other. Alternatively, the battery cell 100 includes only a negative terminal 1022, and a housing of the battery cell 100 is positively charged. In this case, the connecting sheet 230 is connected to a negative terminal 1022 of one of two battery cells 100 and a housing of the other.

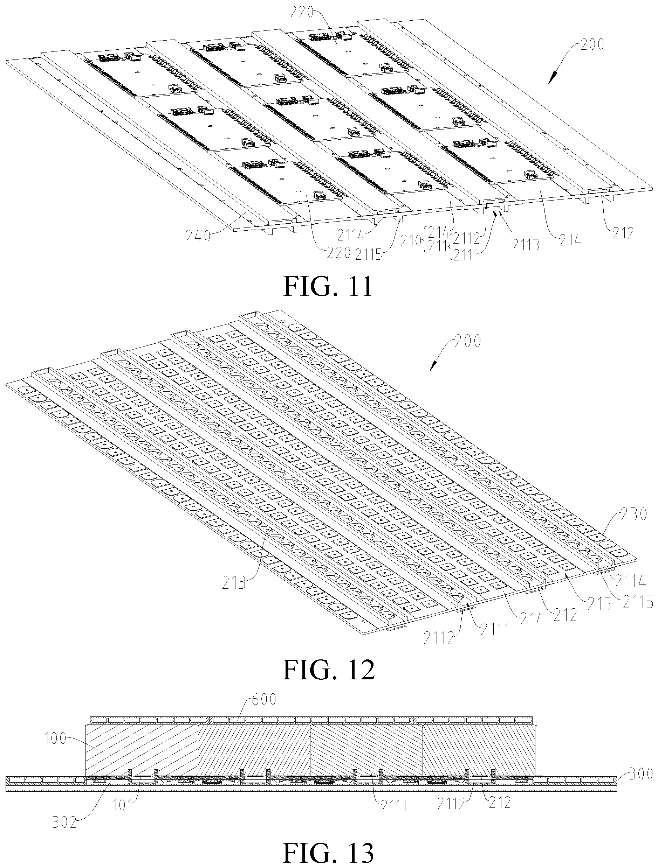

Refer to FIG. 12. In this embodiment of the present disclosure, a side that is of the insulating bracket 210 and that faces the sealing cover 400 may be provided with an accommodating space 215, and the positive terminal 1021 of the battery cell 100 and/or the negative terminal 1022 of the battery cell are located in the accommodating space 215. Herein, in this embodiment of the present disclosure, the accommodating space 215 may be formed integrally by a structure of the insulating bracket 210 (for example, as shown in FIG. 12, the insulating bracket 210 includes a part that is configured as a flat U-shaped structure, and the part is the accommodating space 215). In addition, in other embodiments, the accommodating space 215 may be formed by a concave surface of the insulating bracket 210. This is not limited in the present disclosure. In this arrangement, space of the accommodating cavity occupied by the battery cell 100 in a height direction can be reduced, and space utilization in the height direction of the battery pack is improved. The accommodating space 215 may be in a groove shape or a hole shape. It may be understood that the accommodating space 215 may accommodate both the positive terminal 1021 and the negative terminal 1022 of the battery, or the positive and negative terminal 1022 of the battery are accommodated in respective different accommodating spaces 215.

Further, a depth of the accommodating space 215 may be greater than or equal to a length of the positive terminal 1021 or the negative terminal 1022 of the corresponding battery cell 100, to further improve space utilization in the height direction of the battery pack. It should be noted that a length of the positive terminal 1021 or the negative terminal 1022 is a distance between two outer surfaces of a part of the terminal exposed from a housing of the battery along an axial direction of the terminal, that is, a distance between an outer surface of the terminal facing away from the sealing cover 400 and a housing of the battery cell 100 in the axial direction of the terminal.

In addition, a surface that is of the battery cell 100 and that is provided with the positive terminal 1021 and the negative terminal 1022 may abut against the side that is of the insulating bracket 210 and that faces the sealing cover 400, and the insulating bracket 210 supports the battery cell 100. In this way, a spacing between the battery cell 100 and the insulating bracket 210 can be reduced, and this helps improve space utilization in the height direction of the battery pack.

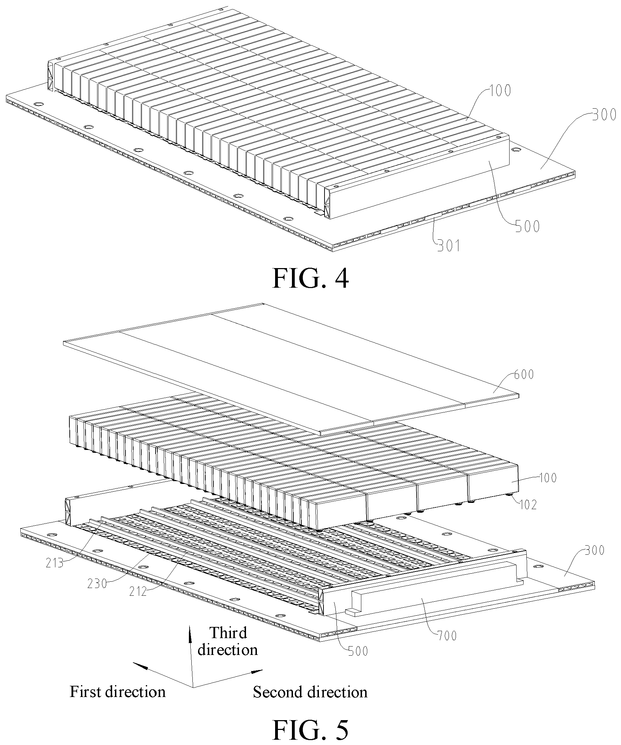

In some embodiments, referring to FIG. 4, the multiple battery cells 100 are sequentially laid out along a first direction to form a battery cell sequence 1001, and the accommodating space 215 is distributed on at least one side of the gas emission piece 200 along a second direction. The positive terminal 1021 of the battery cell 100 and/or the negative terminal 1022 of the battery cell 100 are located in the corresponding accommodating space. The first direction intersects the second direction. For example, in the embodiment shown in FIG. 4, the first direction is perpendicular to the second direction.

Specific formation methods of the tray 300 and the insulating bracket 210 are not limited in the present disclosure. The tray 300 may be configured to include only a bottom plate or the tray 300 is configured to include a bottom plate and side beams disposed around the bottom plate. In this arrangement, a quantity of structural components in the battery pack can be reduced. This facilitates to improve integration of the battery pack, improve energy density of the battery pack, and reduce costs of the battery pack.

For example, in some embodiments, the bottom plate is configured as the insulating bracket 210. That is, the bottom plate and the insulating bracket 210 are a same component. Therefore, a quantity of components in the battery pack can be reduced, and this facilitates to improve integration of the battery pack.

Further, the gas emission piece 200 may include a first sub-channel 2112 and multiple through holes 213. The multiple through holes 213 are provided on the insulating bracket 210. The first sub-channel 2112 is provided in the insulating bracket 210 and is in communication with the outside. The multiple through holes 213 are provided in a one-to-one correspondence with first explosion-proof valves 101 of the multiple battery cells 100, and the multiple through holes 213 are all in communication with the first sub-channel 2112. In this way, after the first explosion-proof valve 101 of the battery cell 100 is opened, high-temperature gas in the battery cell 100 may enter the first sub-channel 2112 through the through hole 213, and be emitted to the outside through the first sub-channel 2112. This can prevent the high-temperature gas from flowing upward directly to impact a cab, to reduce injury to a passenger inside the vehicle.

In other embodiments, the bottom plate has a hollow region 302, and the insulating bracket 210 is disposed in the hollow region 302. The insulating bracket 210 may be bonded to the tray 300. This design facilitates operation. Certainly, the insulating bracket 210 and the bottom plate may be fastened to each other by channel hot melt connection or screw connection. Further, the bottom plate is provided with a first exhaust channel 310, and the gas emission piece 200 is in communication with the outside through the first exhaust channel 310. Specifically, the gas emission piece 200 includes a first sub-channel 2112 and multiple through holes 213. The multiple through holes 213 are provided on the insulating bracket 210. The first sub-channel 2112 is provided in the insulating bracket 210. The multiple through holes 213 are provided in a one-to-one correspondence with first explosion-proof valves 101 of the multiple battery cells 100. The multiple through holes 213 are all in communication with the first sub-channel 2112, and the first sub-channel 2112 is in communication with the first exhaust channel 310. In this way, after the first explosion-proof valve 101 of the battery cell 100 is opened, high-temperature gas in the battery cell 100 may enter the first sub-channel 2112 through the through hole 213, and be emitted to the outside through the first exhaust channel 310. This can prevent the high-temperature gas from flowing upward directly to impact a cab, to reduce injury to a passenger inside a vehicle.

Optionally, a diameter of the through hole 213 may be greater than a diameter of the first explosion-proof valve 101. This arrangement facilitates rapid emission of high-temperature gas. Herein, it should be explained that the diameter of the first explosion-proof valve 101 does not refer to a size of a valve body, but refers to a size of an area distributed by gas emitted from the valve.

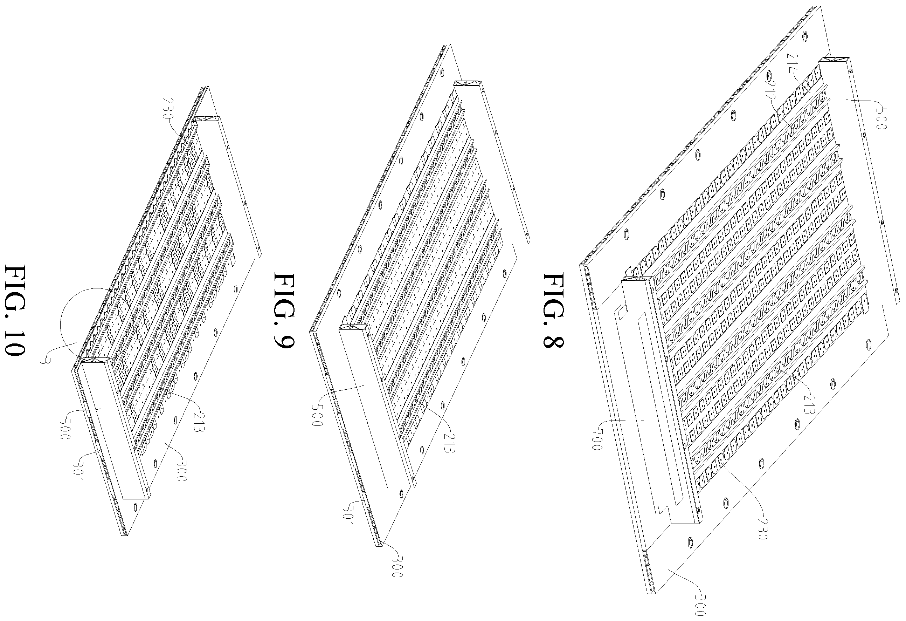

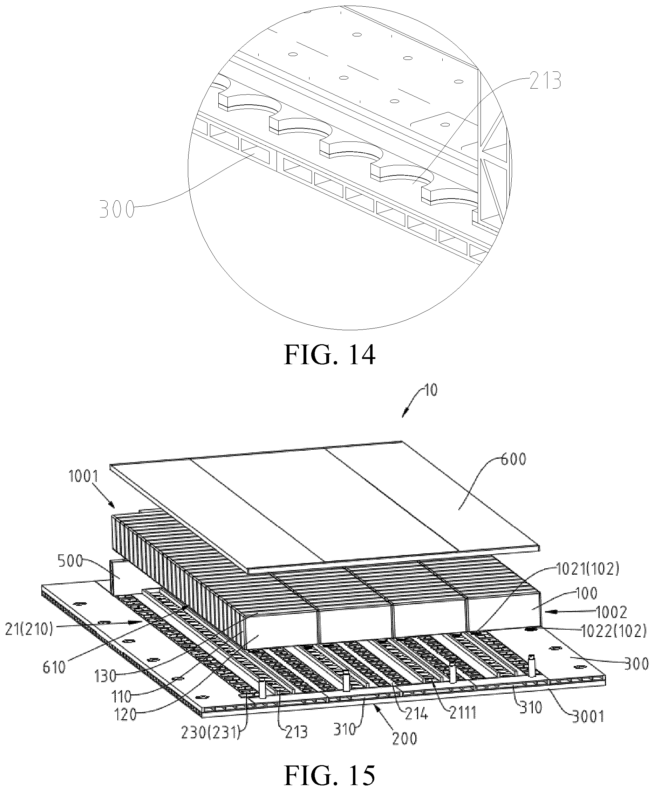

In some embodiments, to emit, through the gas emission piece 200, high-temperature and high-pressure gas emitted from the first explosion-proof valve 101, another explosion-proof valve may be disposed at a position close to an outer surface of the battery pack. Referring to FIG. 9, FIG. 10, and FIG. 14, in some embodiments, the through holes 213 on the insulating bracket 210 extends along a vertical direction (namely, the height direction of the battery pack), the gas emitted from the first explosion-proof valve 101 may enter the first sub-channel 2112 through the through holes 213 and enter the first exhaust channel 310, and a second explosion-proof valve 301 is disposed at one end that is of the first exhaust channel 310 and that is away from the gas emission piece 200. In this way, the high-temperature gas entering the first exhaust channel 310 can be emitted outside the battery pack through the second explosion-proof valve 301, to avoid damage to another good battery cell 100 in the battery pack. Herein, it should be explained that the vertical direction refers to a direction perpendicular a surface of the tray 300. In addition, in other embodiments, the through hole 213 may be disposed to extend obliquely according to an actual requirement.

In some embodiments, the gas emission piece 200 may further include a groove 2113. The groove 2113 may be provided on the insulating bracket 210, and the groove 2113 is open toward a side of the sealing cover 400. The through holes 213 are provided on a bottom wall 2114 of the groove, and the battery cell 100 abuts against a sidewall 2115 of the groove 2113 to form a second sub-channel 2111 through enclosure. The first sub-channel 2112 is provided on a side that is of the insulating bracket 210 and that faces away from the sealing cover 400. The first sub-channel 2112 and the second sub-channel 2111 are oppositely provided and are in communication through the through holes 213. In this way, high-temperature gas in the second sub-channel 2111 may enter the first sub-channel 2112 through the through holes 213, and be emitted to the outside through the first sub-channel 2112. In this design, when the battery cell 100 is faulty, the first explosion-proof valve 101 corresponding to the battery cell 100 emits high-temperature and high-pressure gas in the battery cell 100. The gas flows through the second sub-channel 2111 and enters the first sub-channel 2112 away from another battery cell 100 through the through holes 213. This can prevent the high-temperature and high-pressure gas from remaining in the second sub-channel 2111 and damaging another good battery cell 100.

In some embodiments, the multiple battery cells 100 are sequentially laid out along a first direction to form a battery cell sequence 1001. Multiple battery cell sequences 1001 are disposed and laid out along a second direction, multiple gas emission pieces 200 are disposed and are in a one-to-one correspondence with the multiple battery cell sequences 1001, and the first direction is perpendicular to the second direction. In this way, high-temperature gas in a battery cell 100 in each battery cell sequence 1001 may be emitted to the outside through the gas emission piece 200 corresponding to each battery cell sequence 1001, to reduce mutual interaction.

In other embodiments, the insulating layer 21 is an insulating bracket 210, the tray 300 includes a bottom plate, the insulating bracket 210 is disposed on a side that is of the bottom plate and that faces the sealing cover 400 (for example, the insulating bracket 210 abuts against the bottom plate by surface contact). The gas emission piece 200 may correspond to a position of the first explosion-proof valves 101 of the multiple battery cells 100, and the gas emitted from the first explosion-proof valve 101 flows inside the bottom plate 3001 through the gas emission piece to flow to the outside. The gas emission piece 200 may include multiple exhaust holes, and the multiple exhaust holes are provided on the insulating bracket 210. A second exhaust channel is provided in the bottom plate 3001. The multiple exhaust holes are provided in a one-to-one correspondence with the first explosion-proof valves 101 of the multiple battery cells 100, and the multiple exhaust holes are in communication with the outside through the second exhaust channel. The gas ejected from the first explosion-proof valve 101 enters the second exhaust channel and is emitted through the exhaust hole.

According to some embodiments, the battery pack 10 may include at least one connecting sheet 230. The connecting sheet 230 may be disposed on the insulating layer 21, and the battery cells 100 may be electrically connected to each other through the connecting sheet 230. The connecting sheet and the insulating bracket may be an integrally formed member; and/or the battery pack further includes at least one sampling member 231, the sampling member 231 is connected to the corresponding battery cell 100, and the sampling member 231 and the insulating bracket 210 are integrally formed. In this way, a quantity of structural components in the battery pack can be reduced. This facilitates to improve integration of the battery pack, improve energy density of the battery pack, and reduce costs of the battery pack.

The sampling member 231 may be a sampling harness, FPC (Flexible Printed Circuit, flexible printed circuit), or PCB board (Printed Circuit Board, printed circuit board).

In the foregoing embodiment with the first sub-channel 2112 and the second sub-channel 2111, integration of the first sub-channel 2112 and the second sub-channel 2111 is defined as a third exhaust channel 211. In this case, referring to FIG. 11 to FIG. 13, the third exhaust channel 211 may be separated by an internal partition plate 212 into the second sub-channel 2111 close to the first explosion-proof valve 101 and the first sub-channel 2112 away from the first explosion-proof valve 101, and the partition plate 212 is provided with a through hole 213 at a position directly opposite to the first explosion-proof valve 101. In this design, when the battery cell 100 is faulty, the first explosion-proof valve 101 corresponding to the battery cell 100 emits high-temperature and high-pressure gas in the battery cell 100. The gas flows through the second sub-channel 2111 and enters the first sub-channel 2112 away from another battery cell 100 through the through holes 213. This can prevent the high-temperature and high-pressure gas from remaining in the second sub-channel 2111 and damaging another good battery cell 100.

In this embodiment, a first exhaust channel 310 that is in communication with the first sub-channel 2112 is provided on the tray 300, and the first exhaust channel 310 may be located on a side of the first sub-channel 2112. The first sub-channel 2112 and the first exhaust channel 310 are aligned in height and each extend parallel to the bottom plate of the tray 300. The first exhaust channel 310 extends to a side end surface of the tray 300, and a second explosion-proof valve 301 is disposed at the end.

Herein, the first sub-channel 2112 and the first exhaust channel 310 are aligned in height, so that the first sub-channel 2112 and the first exhaust channel 310 are connected to facilitate gas flowing. In addition, in other embodiments, the heights of the first sub-channel 2112 and the first exhaust channel 310 may be set according to an actual requirement with one being higher and the other lower. In this case, another pipe-type component needs to be disposed between the first sub-channel 2112 and the first exhaust channel 310 for communication.

For the foregoing case in which the insulating bracket 210 needs to be mounted on the tray 300, in some embodiments, the insulating bracket 210 may be bonded to the tray 300. In addition, in other embodiments, the insulating bracket 210 and the tray 300 may be integrally formed. This is not limited in the present disclosure.

In the foregoing embodiment, gas may be emitted by a structure located on the insulating bracket 210 or by a structure located on the insulating bracket 210 and the tray 300, and a gas emission path may be shortened. An air flow that that breaks through the first explosion-proof valve 101 from the battery cell 100 can quickly flow to the outside of the overall structure of the battery pack, to avoid gas accumulation in the battery pack and avoid damage to another battery cell 100.

Refer to FIG. 8 to FIG. 10. In this embodiment of the present disclosure, the third exhaust channel 211 and the first exhaust channel 310 may each extend linearly along a first direction. Arranging the third exhaust channel 211 and the first exhaust channel 310 to extend along a straight line can reduce a production process difficulty, and is more conducive to use of internal space of the battery pack. In addition, in other embodiments, an extension path of the third exhaust channel 211 and the first exhaust channel 310 may be set to a curve, a fold line, or the like according to actual use inside the battery pack. It should be explained herein that, referring to FIG. 5, in this embodiment of the present disclosure, the multiple battery cells 100 may be distributed in a matrix, and the first direction may refer to a length direction of a rectangle (an arrow direction of the first direction in the figure). In addition, in other embodiments, the first direction may also refer to a width direction or an oblique direction of the rectangle. The present disclosure sets no specific limitation on a layout form of the battery cells 100 and the first direction. The battery cells 100 may be located in any direction in a plane in which the insulating bracket 210 is located. The foregoing embodiment is merely an example for description.

Further, to enable all gas emitted from the first explosion-proof valve 101 to enter the third exhaust channel 211, referring to FIG. 1, in this embodiment of the present disclosure, multiple third exhaust channels 211 may be disposed, and are spaced away in a second direction perpendicular to the first direction, and a quantity of first exhaust channels 310 is the same as a quantity of third exhaust channels 211. Each third exhaust channel 211 corresponds to a first exhaust channel 310 in communication with the third exhaust channel 211, so that gas in the third exhaust channel 211 can flow into the first exhaust channel 310 and can be emitted through a second explosion-proof valve 301 at an end of the first exhaust channel 310. As described above, shapes, a quantity, and a layout manner of the third exhaust channels 211 are not limited in the present disclosure, provided that the multiple third exhaust channels 211 can be covered on all first explosion-proof valves 101, so that gas emitted from any first explosion-proof valve 101 can enter the third exhaust channel 211.

In this embodiment of the present disclosure, each first explosion-proof valve 101 may correspond to one through hole 213, so that gas emitted from the first explosion-proof valve 101 can directly pass through the through hole 213 to enter the first sub-channel 2112. In addition, in other embodiments, two or three adjacent first explosion-proof valves 101 may share one through hole 213. In this case, a cross section of the through hole 213 may be in a strip shape, so that gas emitted from the foregoing two or three first explosion-proof valves 101 can pass through the through hole 213.

In this embodiment of the present disclosure, referring to FIG. 1, multiple third exhaust channels 211 are disposed, and the multiple third exhaust channels 211 each extend linearly in the first direction and are spaced away in a second direction perpendicular to the first direction. The insulating bracket 210 includes a plate piece 214 connected to a side of the third exhaust channels 211, and the plate piece 214 may connect the multiple third exhaust channels 211 as a whole. In addition, the plate piece 214 may further provide mounting space for electronic components (such as a battery information collector 220) to be described below.

In this embodiment of the present disclosure, the plate piece 214 may be aligned with the partition plate 212. In this design, during production, the plate piece 214 and the partition plate 212 may be formed integrally, to reduce a process difficulty. In addition, in other embodiments, considering mounting space of another component, the plate piece 214 and the partition plate 212 may be disposed in a structure with one higher and the other lower. This is not limited in the present disclosure.

In addition to the foregoing advantages, the plate piece 214 and the third exhaust channel 211 may form the foregoing flat U-shaped groove structure (the accommodating space 215).

In this embodiment of the present disclosure, the battery pack may further include a heat dissipation plate 610, provided with a flow channel for flowing a heat dissipation medium. The heat dissipation medium may be a liquid or a refrigerant. The multiple battery cells 100 may be laid out along a second direction, to form a battery cell group 1002. Multiple battery cell groups 1002 are disposed, and the multiple battery cell groups 1002 are laid out along the first direction. The first direction is perpendicular to the second direction. The heat dissipation plate 610 is disposed between any two adjacent battery cell groups 1002, and the heat dissipation plate 610 is thermally connected to the two corresponding battery cell groups 1002. By arranging the heat dissipation plate 610 between the two adjacent battery cell groups 1002, heat generated by the battery cells 100 during operation can be quickly dissipated, to avoid a potential safety hazard caused by an excessive temperature inside the battery pack. The thermal connection may be understood as direct contact or connection through thermal conductive adhesive.

Further, to increase a heat dissipation area, in this embodiment of the present disclosure, the second direction is a width direction of the battery cell 100, the first direction is a thickness direction of the battery cell 100, and a width of the battery cell 100 may be greater than a thickness of the battery cell 100. In this design, the battery cell 100 and the heat dissipation plate 610 can have a larger contact heat dissipation area, to improve heat dissipation efficiency. In addition, in other embodiments, the battery cell 100 may also be configured to have a thickness greater than a width. In this case, the heat dissipation plate 610 is disposed on a surface corresponding to the thickness. This is not limited in the present disclosure.

Refer to FIG. 5. In this embodiment of the present disclosure, an outer surface of the battery cell 100 may include two first surfaces 110 opposed along the first direction, two second surfaces 120 opposed along the second direction, and two third surfaces 130 opposed along a third direction. The first direction, the second direction, and the third direction are perpendicular to each other. In the first surface 110, the second surface 120, and the third surface 130, the first surface 110 has a largest area, and the heat dissipation plate 610 is thermally connected to a first surface 110 of a battery cell 100 in the two corresponding battery cell groups 1002. Because the first surface 110 of the battery cell 100 has the largest area, the thermal connection between the heat dissipation plate 610 and the first surface 110 can ensure a maximum heat dissipation area and a best heat dissipation effect. A specific shape of the battery cell 100 and a size relationship of the surfaces are not limited in the present disclosure, provided that the heat dissipation plate 610 can be thermally connected to the battery cell 100, to provide required heat dissipation for the battery cell 100. A specific layout manner of the heat dissipation plate 610 may be adjusted according to an actual requirement. In some embodiments, the first direction is a thickness direction of the battery cell, the second direction is a width direction of the battery cell, and the third direction is a height direction of the battery cell. The height direction of the battery cell is the same as a height direction of the battery pack, that is, is consistent with a height direction of the vehicle. A width and a height of the battery cell each are greater than a thickness of the battery cell. When the first direction is consistent with the width direction of the battery pack, the second direction is consistent with the length direction of the battery pack. When the first direction is consistent with the length direction of the battery pack, the second direction is consistent with the width direction of the battery pack. In addition, the width direction of the battery pack may be consistent with a width direction of the vehicle, and the length direction of the battery pack is consistent with a length direction of the vehicle.

Refer to FIG. 11 and FIG. 12. In this embodiment of the present disclosure, the battery pack 10 may include at least one connecting sheet 230. The connecting sheet 230 may be disposed on the insulating layer 21, and the battery cells 100 may be electrically connected to each other through the connecting sheet 230. The battery pack may further include a battery information collector 220 and a circuit board 240 separately connected to the battery information collector 220 and the connecting sheet 230. The battery information collector 220, the connecting sheet 230, and the circuit board 240 may be separately fastened to the insulating bracket 210. Herein, the battery information collector 220 can monitor and obtain information such as a temperature and a pressure of the battery cell 100 in real time, and transfer the obtained information to the circuit board 240. When receiving abnormal temperature or pressure information, the circuit board 240 may control another component (for example, a speaker and an indicator) to make an alert, so that the battery cell 100 can be replaced in time when the battery cell 100 is abnormal. The multiple battery cells 100 are connected in series or in parallel through the corresponding connecting sheet 230. In this embodiment of the present disclosure, the electrical connecting sheet 230 may be welded to a terminal of the battery cell 100.

Further, in this embodiment of the present disclosure, the connecting sheet 230 and the circuit board 240 may be separately integrated into the insulating bracket 210, and the connecting sheet 230 and the circuit board 240 may be integrally formed with the insulating bracket 210. The connecting sheet 230 may be fastened to a side that is of the insulating bracket 210 and that faces the battery cell 100, to connect to the terminal of the battery cell 100. The circuit board 240 may be embedded in the insulating bracket 210, and the battery information collector 220 may be fastened to a side that is of the insulating bracket 210 and that faces away from the battery cell 100.

The battery information collector 220 in the present disclosure may be evenly laid out between multiple third exhaust channels 211, for example, mounted on the plate piece 214. In addition, in other embodiments, the layout position and manner of the battery information collector 220 may be adaptively modified according to an actual requirement. This is not limited in the present disclosure.

In this embodiment of the present disclosure, the connecting sheet 230 may be integrally hot pressed on the insulating bracket 210. In addition, in other embodiments, the connecting sheet 230 may be further connected to the insulating bracket 210 by a bolt or the like.

Refer to FIG. 1. In this embodiment of the present disclosure, the battery cells 100 may be connected to the connecting sheet 230 only by terminals, so that the battery cells 100 are fastened to the insulating bracket 210. In addition, in other embodiments, to enhance connection strength between the battery cells 100 and the insulating bracket 210 and prevent separation between the battery cells 100 and the insulating bracket 210 due to an external force, the battery cells 100 and the insulating bracket 210 may further be mechanically or chemically connected, for example, through bonding, bolting, and the like. Because the connection methods are well known to a person skilled in the art, details are not described herein.

To ensure structural strength of the insulating bracket 210 and improve stability of a component mounted on the insulating bracket 210, in this embodiment of the present disclosure, the insulating bracket 210 may be of an SMC material. The material has advantages of high mechanical strength, high insulation strength, and the like. In addition, in other embodiments, the insulating bracket 210 may be made of another material having the foregoing advantages. This is not limited in the present disclosure.

To enable real-time cooling and heat dissipation of components such as the battery cells 100 during use of the battery pack, referring to FIG. 1, in this embodiment of the present disclosure, the battery pack may further include an expansion beam 500 and a cooling plate 600 disposed in the accommodating cavity. The expansion beam 500 is disposed adjacent to the multiple battery cells 100, and the expansion beam 500 is fastened to the tray 300. The cooling plate 600 is pressed against a side that is of the battery cell 100 and that faces the sealing cover, and the cooling plate 600 is fixedly connected to the expansion beam 500. In this way, the cooling plate 600 can both limit the battery cells 100 and cool the battery cells 100.

A specific form of the cooling plate 600 is not limited in the present disclosure. For example, in this embodiment of the present disclosure, the cooling plate 600 may be a liquid container provided with multiple pipe connectors 800, and completes water circulation through water inflow and outflow of the multiple pipe connectors 800. In addition, in other embodiments, the cooling plate 600 may also perform cooling by gas circulation.

In this embodiment of the present disclosure, arrangement of the expansion beam 500 adjacent to the multiple battery cells 100 means that the expansion beam 500 may directly or indirectly abut against the battery cells 100. The expansion beam 500 is well known to a person skilled in the art, and is not described herein.

Refer to FIG. 1. In this embodiment of the present disclosure, the battery pack may further include a distribution box 700 disposed in the accommodating cavity.

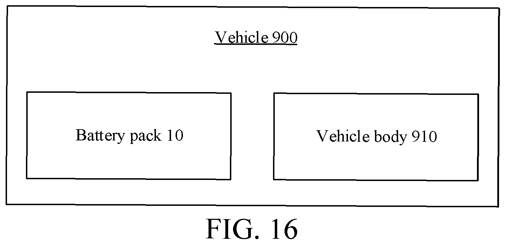

Refer to FIG. 16. According to a second aspect of the present disclosure, a vehicle 900 is provided, including a vehicle body 910 and the foregoing battery pack 10. The tray 300 is fixedly connected to the vehicle body 910, or the vehicle body 910 is integrally formed with the tray 300 or the sealing cover 400. The vehicle body 910 may be a vehicle frame or a chassis of the vehicle 900. The vehicle 900 has all beneficial effects of the battery pack 10, and details are not described herein again.

The implementations of the present disclosure are described in detail above with reference to the accompanying drawings. However, the present disclosure is not limited to the specific details in the foregoing implementations, a plurality of simple deformations may be made to the technical solution of the present disclosure within a range of the technical concept of the present disclosure, and these simple deformations fall within the protection scope of the present disclosure.

It should be additionally noted that, the specific technical features described in the foregoing specific implementations may be combined in any proper manner in a case without conflict. To avoid unnecessary repetition, various possible combinations are not further described in the present disclosure.

In addition, different implementations of the present disclosure may also be arbitrarily combined without departing from the idea of the present disclosure, and these combinations shall still be regarded as content disclosed in the present disclosure.

## Claims

1. A battery pack (10), comprising:
a sealing cover (400);
a tray (300), connecting to the sealing cover (400) to define an accommodating cavity;
a plurality of battery cells (100), arranging in the accommodating cavity, a first explosion-proof valve (101) being disposed on a side that is of the battery cell (100) and that facing away from the sealing cover (400); and
an insulating layer (21), arranging on the side that is of the battery cell (100) and that facing away from the sealing cover (400), a gas emission piece (200) being disposed on the insulating layer (21), and the gas emission piece (200) communicating the outside and the first explosion-proof valve (101).

2. The battery pack (10) according to claim 1, further comprising: at least one connecting sheet (230), the connecting sheet (230) being disposed on the insulating layer (21), and the battery cells (100) being electrically connected to each other through the connecting sheet (230).

3. The battery pack (10) according to claim 1 or 2, wherein the insulating layer (21) is an insulating bracket (210), the tray (300) comprises a bottom plate (3001), and the bottom plate (3001) is configured as the insulating bracket (210).

4. The battery pack (10) according to claim 3, wherein the gas emission piece (200) comprises a first sub-channel (2112) and a plurality of through holes (213), the plurality of through holes (213) are provided on the insulating bracket (210), the first sub-channel (2112) is provided in the insulating bracket (210) and is in communication with the outside, the plurality of through holes (213) are provided in a one-to-one correspondence with first explosion-proof valves (101) of the plurality of battery cells (100), and the plurality of through holes (213) are all in communication with the first sub-channel (2112).

5. The battery pack (10) according to claim 1 or 2, wherein the insulating layer (21) is an insulating bracket (210), the tray (300) comprises a bottom plate (3001), the bottom plate (3001) has a hollow region (302), and the insulating bracket (210) is disposed in the hollow region (302).

6. The battery pack (10) according to claim 5, wherein a first exhaust channel (310) is disposed in the bottom plate (3001), and the gas emission piece (200) is in communication with the outside through the first exhaust channel (310).

7. The battery pack (10) according to claim 6, wherein the gas emission piece (200) comprises a first sub-channel (2112) and a plurality of through holes (213), the plurality of through holes (213) are provided on the insulating bracket (210), the first sub-channel (2112) is provided in the insulating bracket (210), the plurality of through holes (213) are provided in a one-to-one correspondence with first explosion-proof valves (101) of the plurality of battery cells (100), the plurality of through holes (213) are all in communication with the first sub-channel (2112), and the first sub-channel (2112) is in communication with the first exhaust channel (310).

8. The battery pack (10) according to claim 4 or 7, wherein the gas emission piece (200) further comprises a groove (2113), the groove (2113) is provided on the insulating bracket (210), the groove (2113) is open to a side of the sealing cover (400), the through holes (213) are provided on a bottom wall (2114) of the groove (2113), the battery cell (100) abuts against a sidewall (2115) of the groove (2113) to form a second sub-channel (2111) through enclosure, the first sub-channel (2112) is provided on a side that is of the insulating bracket (210) and that faces away from the sealing cover (400), and the first sub-channel (2112) and the second sub-channel (2111) are oppositely provided and are in communication through the through holes (213).

9. The battery pack (10) according to claim 8, wherein the plurality of battery cells (100) are sequentially laid out along a first direction to form a battery cell sequence (1001), a plurality of battery cell sequences (1001) are disposed and are sequentially laid out along a second direction, a plurality of gas emission pieces (200) are disposed and are in a one-to-one correspondence with the plurality of battery cell sequences (1001), and the first direction is perpendicular to the second direction.

10. The battery pack (10) according to claim 6 or 7, wherein a second explosion-proof valve (301) is disposed at an end of the first exhaust channel (310) away from the gas emission piece.

11. The battery pack (10) according to any one of claims 5 to 7 and 10, wherein the insulating bracket (210) is bonded to the tray (300).

12. The battery pack (10) according to claim 4 or 7, wherein a diameter of the through hole (213) is greater than a diameter of the first explosion-proof valve (101).

13. The battery pack (10) according to claim 1 or 2, wherein the insulating layer (21) is an insulating bracket (210), the tray (300) comprises a bottom plate (3001), the insulating bracket (210) is disposed on a side that is of the bottom plate (3001) and that faces the sealing cover (400), the gas emission piece (200) comprises a plurality of exhaust holes, the plurality of exhaust holes are provided on the insulating bracket (210), a second exhaust channel is provided in the bottom plate (3001), the plurality of exhaust holes are provided in a one-to-one correspondence with first explosion-proof valves (101) of the plurality of battery cells (100), and the plurality of exhaust holes are in communication with the outside through the second exhaust channel.

14. The battery pack (10) according to any one of claims 3 to 13, comprising at least one connecting sheet (230), the connecting sheet (230) being disposed on the insulating layer (21), and the battery cells (100) being electrically connected to each other through the connecting sheet (230), wherein
the battery cell (100) has a positive terminal (1021) and a negative terminal (1022), the positive terminal (1021) and the negative terminal (1022) are located on a side that is of the corresponding battery cell (100) and that faces away from the sealing cover (400), and at least one connecting sheet (230) is electrically connected to a positive terminal (1021) of one of the corresponding two battery cells (100) and a negative terminal (1022) of the other.

15. The battery pack (10) according to claim 14, wherein a side that is of the insulating bracket (210) and that faces the sealing cover (400) is provided with an accommodating space (215), and the positive terminal (1021) of the battery cell (100) and/or the negative terminal (1022) of the battery cell (100) are located in the accommodating space (215).

16. The battery pack (10) according to claim 15, wherein a depth of the accommodating space (215) is greater than or equal to a length of the positive terminal (1021) or the negative terminal (1022) of the corresponding battery cell (100).

17. The battery pack (10) according to claim 15 or 16, wherein a surface that is of the battery cell (100) and that is provided with the positive terminal (1021) and the negative terminal (1022) abuts against the side that is of the insulating bracket (210) and that faces the sealing cover (400), and the insulating bracket (210) supports the battery cell (100).

18. The battery pack (10) according to any one of claims 15 to 17, wherein the plurality of battery cells (100) are sequentially laid out along the first direction to form the battery cell sequence (1001), the accommodating space (215) is distributed on at least one side of the gas emission piece (200) along the second direction, the positive terminal (1021) of the battery cell (100) and/or the negative terminal (1022) of the battery cell (100) are located in the corresponding accommodating space (215), and the first direction is perpendicular to the second direction.

19. The battery pack (10) according to any one of claims 3 to 18, comprising at least one connecting sheet (230), the connecting sheet (230) being disposed on the insulating layer (21), and the battery cells (100) being electrically connected to each other through the connecting sheet (230), wherein
the connecting sheet (230) and the insulating bracket (210) are integrally formed; and/or
the battery pack further comprises at least one sampling member (231), the sampling member (231) is connected to the corresponding battery cell (100), and the sampling member (231) and the insulating bracket (210) are integrally formed.

20. The battery pack (10) according to claim 19, wherein the sampling member (231) is a sampling harness, FPC, or PCB board.

21. The battery pack (10) according to any one of claims 3 to 20, comprising at least one connecting sheet (230), the connecting sheet (230) being disposed on the insulating layer (21), and the battery cells (100) being electrically connected to each other through the connecting sheet (230), wherein
the battery pack (10) further comprises a battery information collector (220) and a circuit board (240) that is separately connected to the battery information collector (220) and the connecting sheet (230), and the battery information collector (220), the connecting sheet (230), and the circuit board (240) each are fastened to the insulating bracket (210).

22. The battery pack (10) according to claim 21, wherein the connecting sheet (230) and the circuit board (240) each are integrated on the insulating bracket (210), and the connecting sheet (230) and the circuit board (240) each are formed integrally with the insulating bracket (210), wherein the connecting sheet (230) is fastened to a side that is of the insulating bracket (210) and that faces the battery cell (100), the circuit board (240) is embedded in the insulating bracket (210), and the battery information collector (220) is fastened to a side that is of the insulating bracket (210) and that faces away from the battery cell (100).

23. The battery pack (10) according to any one of claims 1 to 22, further comprising a heat dissipation plate (610), provided with a flow channel for flowing a cooling medium, the plurality of battery cells (100) being laid out along the second direction to form a battery cell group (1002), a plurality of battery cell groups (1002) being disposed, the plurality of battery cell groups (1002) being laid out along the first direction, the first direction being perpendicular to the second direction, the heat dissipation plate (610) being disposed between any two adjacent battery cell groups (1002), and the heat dissipation plate (610) being thermally connected to the two corresponding battery cell groups (1002).

24. The battery pack (10) according to claim 23, wherein the second direction is a width direction of the battery cell (100), the first direction is a thickness direction of the battery cell (100), and a width of the battery cell (100) is greater than a thickness of the battery cell (100).

25. The battery pack (10) according to claim 24, wherein an outer surface of the battery cell (100) comprises two first surfaces (110) opposed along the first direction, two second surfaces (120) opposed along the second direction, and two third surfaces (130) opposed along a third direction, and the first direction, the second direction, and the third direction are perpendicular to each other; and
in the first surface (110), the second surface (120), and the third surface (130), the first surface (110) has a largest area, and the heat dissipation plate (610) is thermally connected to a first surface (110) of each battery cell (100) in the two corresponding battery cell groups (1002).

26. The battery pack (10) according to any one of claims 1 to 25, further comprising an expansion beam (500) and a cooling plate (600) disposed in the accommodating cavity, the expansion beam (500) being disposed adjacent to the plurality of battery cells (100), the expansion beam (500) being fastened to the tray (300), the cooling plate (600) being pressed against a side that is of the battery cell (100) and that faces the sealing cover (400), and the cooling plate (600) being fixedly connected to the expansion beam (500).

27. A vehicle (900), comprising: a vehicle body (910) and the battery pack (10) according to any one of claims 1 to 26, the tray (300) being fixedly connected to the vehicle body (910); or the vehicle body (910) being integrally formed with the tray (300) or the sealing cover (400).
